# EUROPÄISCHE PATENTANMELDUNG

(11) **EP 1 944 425 A2**
(43) Veröffentlichungstag der Anmeldung: **16.07.2008**
(21) Anmeldenummer: 07021874.8
(22) Anmeldetag: 12.11.2007
(51) Int. Cl.: E04D 13/03, F24J 2/52

(54) **Modulares Energiegewinnungssystem**

(30) Priorität: 09.01.2007 DE 202007000526 U
(71) Anmelder: ROTO FRANK AG, 70771 Leinfelden-Echterdingen (DE)
(72) Erfinder: Bartmann, Ulrich Dipl.-Ing., 76661 Philippsburg (DE); Wittmann, Dieter, 97980 Apfelbach (DE); Brunner, Elmar, 97922 Lauda-Königshofen (DE)
(74) Vertreter: Grosse, Rainer

(57) **Zusammenfassung**

Die Erfindung betrifft ein Energiegewinnungssystem mit mehren in einer Montageebene (2) nebeneinander platzierbaren Energiemodulen (3), wobei die Energiemodule (3) zumindest teilweise um ein in der Montageebene (2) vorhandenes Fremdelement (4) herum angeordnet sind, für jedes Energiemodul (3) und jedes Fremdelement (4) ein eigener Montagerahmen (9, 34) vorgesehen ist, und an den Montagerahmen (9, 34) Verbindungsmittel (16, 17, 18, 31, 33, 36, 38, 44, 45) zur mechanischen Verbindung benachbarter Energiemodule (3) oder zur Verbindung des Fremdelements (4) mit benachbarten Energiemodulen (3) angebracht sind.

## Beschreibung

Die Erfindung betrifft ein Energiegewinnungssystem mit mehreren in einer Montageebene nebeneinander platzierbaren Energiemodulen.

Derartige Energiegewinnungssysteme sind insbesondere zur Montage auf einem Steildach eines Gebäudes bestimmt. Bei den Energiemodulen kann es sich beispielsweise um Solarthermie- oder Photovoltaikmodule handeln. Ein solches Energiegewinnungssystem kann problemlos an Dachflächen montiert werden, die mit keinen Fremdelementen wie Dachfenstern, Kaminen oder Antennenmasten versehen sind. In der Regel haben die zur Montage des Energiegewinnungssystems verfügbaren Dachflächen oder -ebenen aber derartige Fremdelemente, so dass sich die Anbringung des Energiegewinnungssystems erheblich schwieriger gestaltet. Oft werden dann kostenträchtige auf den Einzelfall abgestellte Spezialkonstruktionen verwendet, um diese Fremdelemente zu umbauen und in das Energiegewinnungssystem einzubinden.

Die Aufgabe der Erfindung besteht nun darin, ein Energiegewinnungssystem der eingangs bezeichneten Art anzugeben, bei dem Fremdelemente in einfacher Weise eingebunden werden können.

Zur Lösung dieser Aufgabe wird ein Energiegewinnungssystem entsprechend den Merkmalen des Anspruchs 1 angegeben. Bei dem erfindungsgemäßen Energiegewinnungssystem sind die Energiemodule zumindest teilweise um ein in der Montageebene vorhandenes Fremdelement herum angeordnet und für jedes Energiemodul und jedes Fremdelement ist ein eigener Montagerahmen vorgesehen. Außerdem sind an den Montagerahmen Verbindungsmittel zur mechanischen Verbindung benachbarter Energiemodule oder zur Verbindung des Fremdelements mit benachbarten Energiemodulen angebracht.

Der erfindungsgemäß auch für das einzubindende Fremdelement vorgesehne Montagerahmen erleichtert die Montage erheblich. Insbesondere kann dadurch die zur mechanischen Verbindung der Energiemodule verwendete Technik auch für die Einbindung des Fremdelements verwendet werden. Der Aufwand für Spezialteile zum Umbauen des Fremdelements entfällt entweder komplett oder hält sich zumindest in überschaubaren Grenzen. Es kann weitestgehend auf wenige standardisierte Komponenten zurückgegriffen werden.

Vorteilhafte Ausgestaltungen des erfindungsgemäßen Energiegewinnungssystems ergeben sich aus den Merkmalen der von Anspruch 1 abhängigen Ansprüche.

Günstig ist eine Variante, bei der insbesondere alle Montagerahmen zumindest gleich groß und vorzugsweise sogar baugleich ausgeführt sind. Dadurch reduziert sich die vorzuhaltende Komponentenvielfalt. Dies senkt die Kosten.

Weiterhin können die Verbindungsmittel vorzugsweise auf einer Oberseite der Montagerahmen befestigte Profilschienen umfassen. Dies erleichtert die Verbindung der Energiemodule und die Einbindung von Fremdelementen. Außerdem lassen sich Profilschienen einfach als Massenartikel herstellen.

Insbesondere können die Verbindungsmittel weiterhin auf benachbarte Profilschienen benachbarter Montagerahmen aufsteckbare Verbindungselemente, z.B. in Gestalt von Verbindungsblechen, umfassen. Diese Verbindungstechnik ist so sowohl einfach im Aufbau als auch flexibel in der Anwendung.

Gemäß einer anderen günstigen Variante ist mindestens ein zwischen dem Fremdelement und dem dem Fremdelement zugeordneten Montagerahmen einsetzbares Überbrückungselement vorgesehen. Dieses ebenfalls beispielsweise als Blech ausgeführte Überbrückungselement lässt sich ohne Probleme an das jeweils einzubindende Fremdelement anpassen. Alle anderen zur Einbindung des Fremdelements verwendeten Komponenten unterscheiden sich dagegen praktisch nicht von denen zur Verbindung der Energiemodule untereinander.

Vorzugsweise ist an den Profilschienen jeweils mindestens eine Dichtungsaufnahme vorgesehen. Damit können Dichtungen zwischen den Profilschienen einerseits und den Verbindungs- oder Überbrückungselementen oder Teilen der Energiemodule andererseits mit gutem und vor allem dauerhaftem Sitz eingefügt werden.

Bei einer weiteren vorteilhaften Ausgestaltung umfassen die Profilschienen jeweils mindestens einen vorstehenden Montagesteg. Dies erleichtert das Anbringen der Verbindungs- und der Überbrückungselemente.

Günstig ist weiterhin eine Variante, bei der die Montagerahmen insbesondere an ihrer Unterseite mit einer Rückwand versehen sind. Dies erhöht die mechanische Stabilität.

Außerdem ist es bevorzugt, die den Energiemodulen zugeordneten Montagerahmen mit Anschlussöffnungen zur Durchführung von Funktionsleitungen zu versehen, so dass neben der mechanischen Verbindung auch ein funktionelles Anschließen und Verbinden der Energiemodule besonders leicht möglich ist.

Bei einer anderen günstigen Variante haben die Montagerahmen jeweils eine Rechteckform mit vier Wänden, wobei eine Wand eine niedrigere Höhe als die anderen drei Wände hat. Die Seite mit der niedrigeren Wandhöhe wird insbesondere so montiert, dass sie unten angeordnet, also der Dachrinne zugewandt ist. Dies verbessert die Wasserdichtheit.

Weiterhin sind die Querabmessungen der für die Montagerahmen insbesondere verwendeten Holzbalken an diejenigen der an der jeweiligen Oberseite montierten Profilschienen angepasst. Die Querabmessungen von Holzbalken und darauf montierter Profilschiene sind praktisch gleich. Dadurch reduzieren sich der Materialbedarf und das Gewicht.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Energiegewinnungssystems mit mehreren Energiemodulen und einem als Fremdelement eingebundenen Dachfenster in teilmontiertem Zustand und in perspektivischer Draufsicht,
- Fig. 2 und 3: jeweils einen Querschnitt an einer Verbindungsstelle zwischen zwei benachbarten Energiemodulen des Energiegewinnungssystems gemäß Fig. 1,
- Fig. 4 und 5: jeweils einen Querschnitt an einer Verbindungsstelle zwischen dem Dachfenster und einem benachbarten Energiemodul des Energiegewinnungssystems gemäß Fig. 1,
- Fig. 6: ein Ausführungsbeispiel eines Energiegewinnungssystems mit Energiemodulen und einem eingebundenen nach oben abstehenden Fremdelement in teilmontiertem Zustand und in Querschnittsdarstellung und
- Fig. 7 bis 9: jeweils eine zur Verbindung der Energiemodule und des Fremdelements der Energiegewinnungssysteme gemäß Fig. 1 bis 6 eingesetzte Profilschiene in Querschnittsdarstellung.

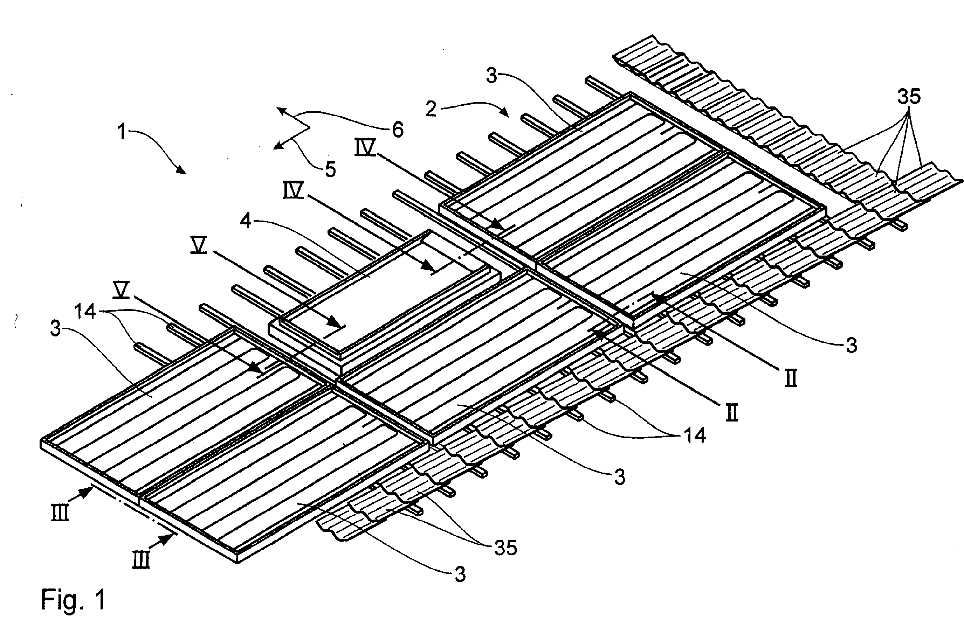

Einander entsprechende Teile sind in Fig. 1 bis 9 mit denselben Bezugszeichen versehen.

In Fig. 1 ist ein Ausführungsbeispiel eines Energiegewinnungssystems 1 gezeigt. Es ist in einer geneigten Montageebene 2 eines Steildachs angeordnet und umfasst neben mehreren nebeneinander platzierten Energiemodulen 3 auch ein Fremdelement in Form eines Dachfensters 4. Im Ausführungsbeispiel sind die Energiemodule 3 als Solarthermie-Module ausgeführt. Grundsätzlich könnte das Energiegewinnungssystem 1 aber auch nach einem anderen Prinzip, beispielsweise nach dem photovoltaischen Prinzip, arbeiten.

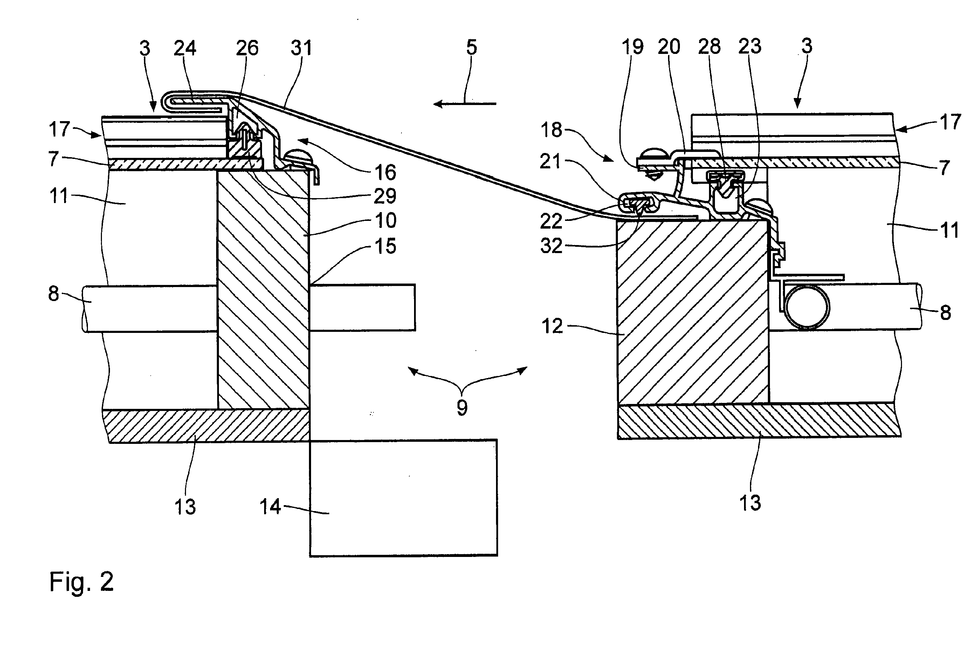

In Fig. 1 ist das Energiegewinnungssystem 1 in einem nur teilmontierten Zustand wieder gegeben. Es fehlen insbesondere noch einige Verbindungselemente zwischen den Energiemodulen 3 und dem Dachfenster 4. Der endmontierte Zustand geht aus den in Fig. 2 bis 5 gezeigten Querschnittsdarstellungen von Verbindungsstellen zwischen benachbarten Energiemodulen 3 sowie von Verbindungsstellen zwischen dem Dachfenster 4 und einem benachbarten Energiemodul 3 hervor. Die Lagen der jeweiligen Querschnitte sind in Fig. 1 durch die Angaben II - II, III - III, IV - IV und V - V kenntlich gemacht.

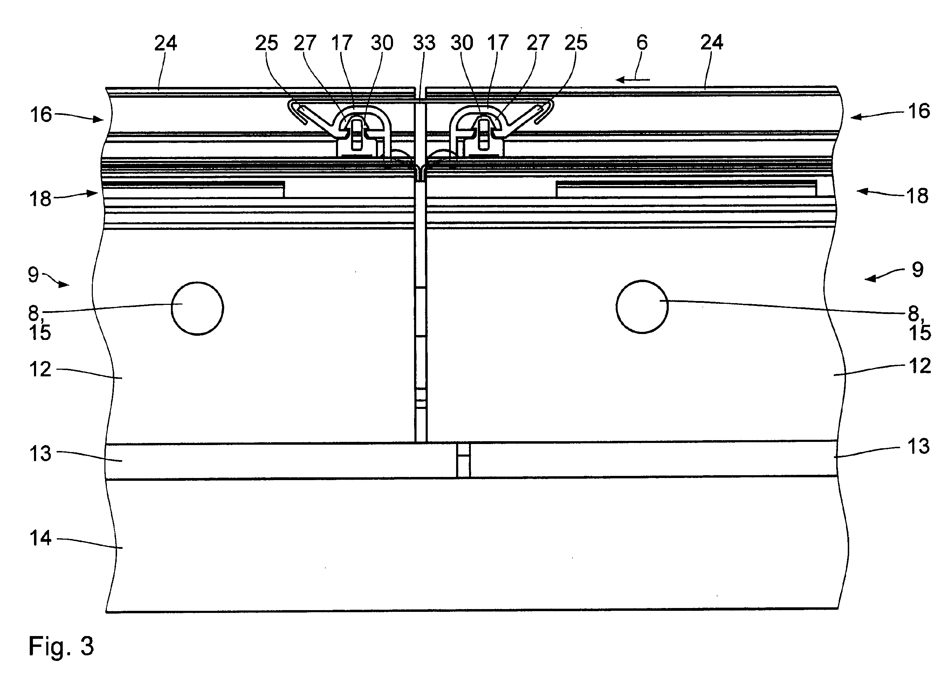

In Fig. 2 ist eine mechanische Verbindung zwischen zwei Energiemodulen 3 in einer vom Dachfirst zur Dachrinne verlaufenden Dachneigungsrichtung 5 gezeigt. In Fig. 3 ist eine mechanische Verbindung zwischen zwei Energiemodulen 3 in einer zur Dachneigungsrichtung 5 senkrechten Querrichtung 6 gezeigt. Beide Richtungen 5 und 6 liegen innerhalb der Montageebene 2.

Jedes Energiemodul 3 umfasst einen Sonnenkollektor mit einer oberen Glasabdeckplatte 7 und einem darunter angeordneten System aus Funktionsleitungen, die bei den solarthermischen Energiemodulen 3 als Wasserleitungen 8 ausgebildet sind.

Die Energiemodule 3 umfassen außerdem jeweils einen Montagerahmen 9. Der Montagerahmen 9 hat einen rechteckigen Holzrahmen mit einer oberen Wand 10, zwei in Dachneigungsrichtung 5 orientierten Seitenwänden 11 und einer unteren Wand 12 sowie eine an einer Unterseite des Holzrahmens angebrachte Rückwand 13. Der Montagerahmen 9 ist mit der als Bodenplatte ausgeführten Rückwand 13 auf Dachlatten 14 des Steildachs angebracht. Die obere Wand 10 und die Seitenwände 11 sind in etwa gleich hoch, wohingegen die untere Wand 12 eine niedrigere Höhe aufweist. Die Wände 10 bis 12 sind teilweise mit Anschlussöffnungen 15 zur Durchführung der Wasserleitungen 8 versehen.

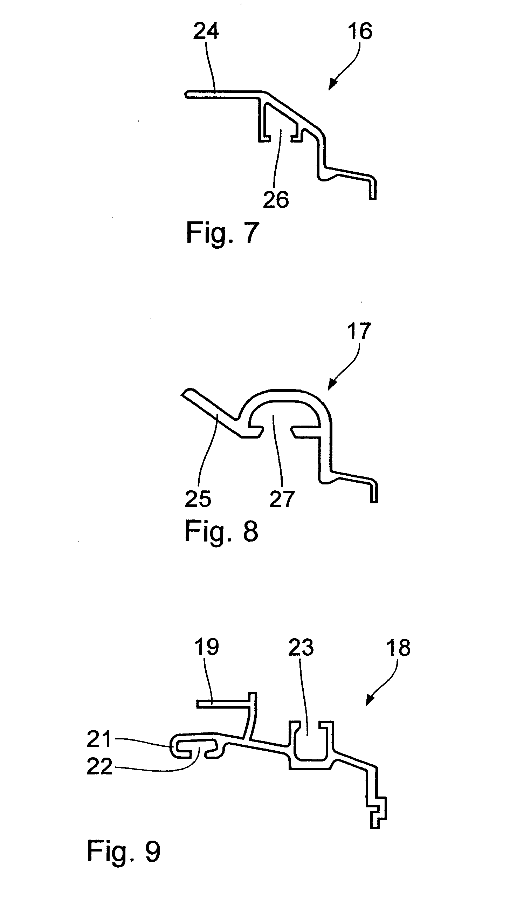

Die Glasabdeckplatte 7 des Energiemoduls 3 ist mittels einer oberen quer verlaufenden Profilschiene 16, zweier seitlicher längs verlaufender Profilschienen 17 und einer unteren quer verlaufenden Profilschiene 18 an einer Oberseite des Montagerahmens 9 befestigt. Die in Fig. 7 bis 9 jeweils in Querschnittsdarstellung gezeigten Profilschienen 16 bis 18 sind an dem Holzrahmen angeschraubt. An einem in Dachneigungsrichtung 5 vorstehenden ersten Montagesteg 19 der unteren Profilschiene 18 (siehe Fig. 2 und 9) ist zur Halterung der Glasabdeckplatte 7 eine weitere Halteschiene 20 angeschraubt. An der unteren Profilschiene 18 ist ein zweiter Montagesteg 21 mit einer am vorderen Ende angeordneten und im Querschnitt etwa C-förmigen nach unten offenen Dichtungsaufnahme 22 vorgesehen. Der zweite Montagesteg 21 ist senkrecht zur Montageebene 2 unterhalb des ersten Montagestegs 19 angeordnet und steht ebenfalls in die Dachneigungsrichtung 5 vor. Die beiden Montagestege 19 und 21 sind etwa parallel zueinander. An einer rückwärtigen Verlängerung des zweiten Montagestegs 21 ist eine im Querschnitt etwa U-förmige nach oben offene Dichtungsaufnahme 23 angeordnet.

Auch die obere Profilschiene 16 (siehe Fig. 2 und 7) und die seitlichen Profilschienen 17 (siehe Fig. 3 und 8) haben jeweils einen Montagesteg 24 bzw. 25, wobei auch der Montagesteg 24 in die Dachneigungsrichtung 5 vorsteht. Dagegen erstreckt sich der Montagesteg 25 schräg nach oben jeweils in Richtung des Inneren des Montagerahmens 9. Außerdem hat die obere Profilschiene 16 eine nach unten offene Dichtungsaufnahme 26. Ebenso sind die seitlichen Profilschienen 17 jeweils mit einer nach unten offenen Dichtungsaufnahme 27 versehen.

In die Dichtungsaufnahmen 23, 26 und 27 ist zur abdichtenden Verbindung zwischen der jeweiligen Profilschiene 18, 16 bzw. 17 einerseits und der Glasabdeckplatte 7 andererseits jeweils eine Dichtung 28, 29, bzw. 30 eingesetzt (siehe Fig. 2 und 3).

Gemäß Fig. 2 ist zwischen der oberen Profilschiene 16 einer der Energiemodule 3 und der unteren Profilschiene 18 des in Dachneigungsrichtung 5 darüber, also näher zum Dachfirst, angeordneten benachbarten Energiemoduls 3 ein Verbindungsblech 31 vorgesehen. Dieses Verbindungselement ist auf- bzw. eingesteckt. Mit seinem umgebogenen unteren Rand umgreift es den Montagesteg 24 der oberen Profilschiene 16, so dass eine falzähnliche Verbindung resultiert. Mit seinem gegenüberliegenden oberen Rand ist es zwischen den Montagesteg 21 der unteren Profilschiene 18 und die Oberseite der unteren Wand 12 des Montagerahmens 9 eingeschoben. Eine in die Dichtungsaufnahme 22 optional einsetzbare Dichtung 32 sorgt an dieser Stelle für eine abgedichtete Verbindung.

Analog und wie aus Fig. 3 ersichtlich ist zwischen den seitlichen Profilschienen 17 zweier benachbarter Energiemodule 3 ein Verbindungsblech 33 vorgesehen. Dieses weitere Verbindungselement ist auf die schwalbenschwanzförmig auseinander stehenden Montagestege 25 der zu verbindenden benachbarten seitlichen Profilschienen 17 aufgesteckt, aufgeschoben oder aufgeschnappt. Dazu weist das Verbindungsblech 33 an seinen beiden Längsseiten jeweils eine Umbiegung auf, deren Umbiegungswinkel an den schrägen Aufstellungswinkel der zu umgreifenden Montagestege 25 angepasst ist.

Die Oberkante der oberen Profilschiene 16 überragt bezogen auf die Ebene der Rückwand 13 des jeweiligen Energiemoduls 3 die Oberkanten der seitlichen Profilschienen 17, welche ihrerseits die Oberkante der unteren Profilschiene 18 überragen (siehe Fig. 2 und 3). Die Aufbauhöhe nimmt also in Dachneigungsrichtung 5 ab. Dies wird auch durch die geringere Höhe der unteren Wand 12 erreicht. Dadurch ist in Verbindung mit der Dachneigung ein guter Wasserablauf gewährleistet. Es dringt so kein Wasser in die Energiemodule 3 ein.

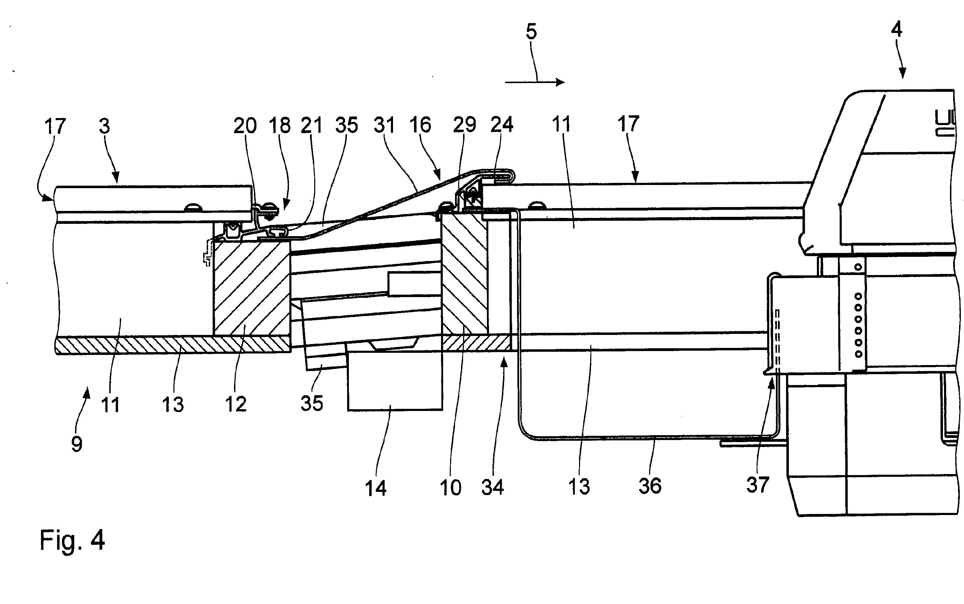

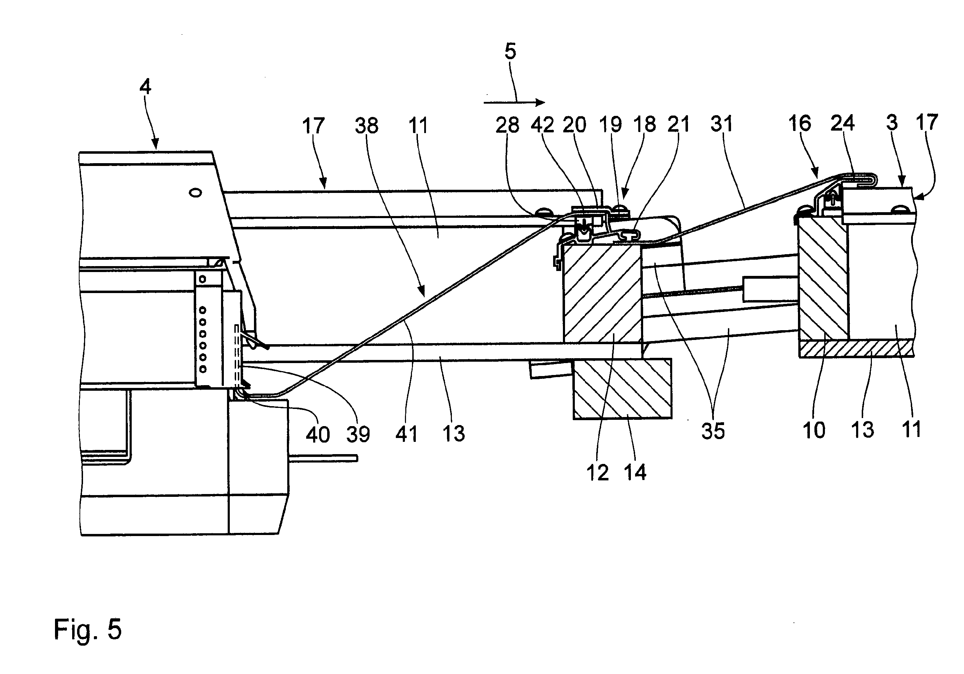

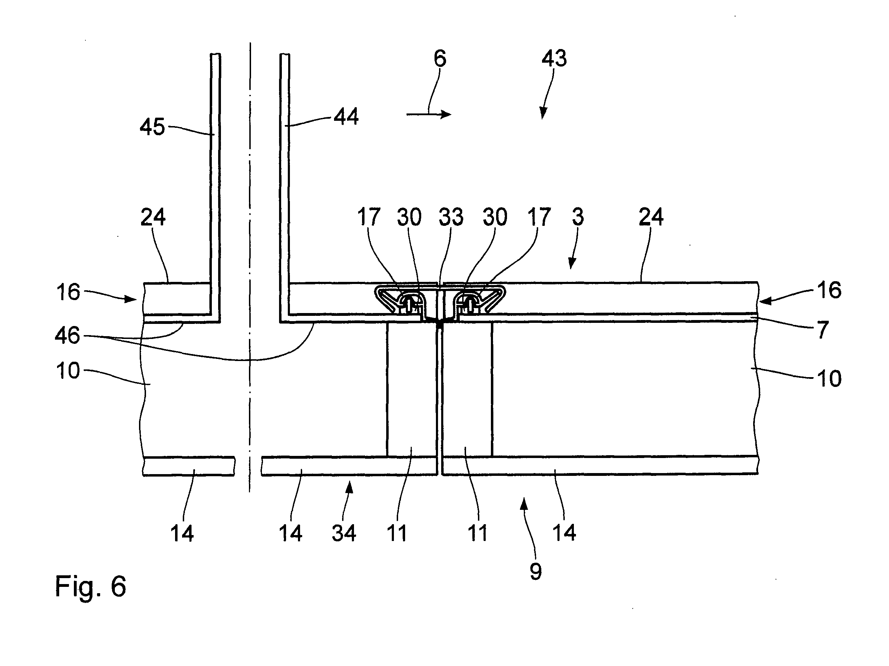

Aus den Querschnittsdarstellungen gemäß Fig. 4 und 5 geht die mechanische Einbindung des Dachfensters 4 in das Energiegewinnungssystem 1 hervor. Dargestellt ist die Einbindung jeweils in Dachneigungsrichtung 5, und zwar in Fig. 4 oberhalb und in Fig. 5 unterhalb des Dachfensters 4. Die seitliche Einbindung in Querrichtung 6 erfolgt dementsprechend und in Anwendung der in Fig. 3 gezeigten Verbindungstechnik (siehe hierzu ergänzend auch Fig. 6).

Auch dem Dachfenster 4 wird wie den Energiemodulen 3 ein Montagerahmen in Form eines Montagehilfsrahmens 34 zugeordnet, der das Dachfenster 4 vollständig umgibt. Der Montagehilfsrahmen 34 hat die gleiche Größe und Form wie die Montagerahmen 9 der Energiemodule 3. Alle Montagerahmen 9 und Montagehilfsrahmen 34 sind im Wesentlichen, d.h. insbesondere bis auf die ggf. in unterschiedlichem Umfang vorgesehenen Anschlussöffnungen 15 und bis auf einen Rückwandausschnitt beim Montagehilfsrahmen 34 des Dachfensters 4, baugleich ausgeführt.

Zur besseren Übersichtlichkeit sind bei dem in Fig. 4 und 5 gezeigten Montagerahmen 9 die funktionellen Komponenten der Energiemodule 3 nicht mit eingetragen. Dafür sind in den Zwischenbereichen zwischen dem Montagerahmen 9 und dem Montagehilfsrahmen 34, die wie bereits anhand von Fig. 2 erläutert jeweils mittels eines Verbindungsblechs 31 überspannt werden, Dachziegel 35 in seitlicher Ansicht zu erkennen.

In dem in Fig. 4 dargestellten oberen Zwischenraum zwischen dem Montagehilfsrahmen 34 und dem Dachfenster 4 ist ein Überbrückungselement in Form eines Eindeckblechs 36 vorgesehen. Das Eindeckblech 36 hat einen etwa U-förmigen Querschnitt. Ein entsprechend, d.h. in etwa senkrecht, umgebogener Rand des oberen U-Schenkels des Eindeckblechs 36 ist - wie die Glasabdeckplatte 7 bei einem der Montagerahmen 9 - mittels der Dichtung 29 zwischen der oberen Profilschiene 16 und der Oberseite der oberen Wand 10 des Montagehilfsrahmens 34 eingeklemmt. Der untere U-Schenkel des Eindeckblechs 36 ist in eine am Dachfenster 4 hierfür vorgesehene Einstecköffnung 37 eingeführt.

Auch in dem in Fig. 5 dargestellten unteren Zwischenraum zwischen dem Montagehilfsrahmen 34 und dem Dachfenster 4 ist ein Überbrückungselement in Form eines weiteren Eindeckblechs 38 vorgesehen. Die Eindeckbleche 36 und 38 können auch einstückig miteinander verbunden sein. Dann liegt eine Ausführungsform als Eindeckrahmen vor.

Das Eindeckblech 38 hat an seiner Oberseite einen senkrecht abgewinkelten Schenkel 39, der in eine am Dachfenster 4 hierfür vorgesehene Einstecköffnung 40 eingeführt ist. Insofern gleichen sich die Eindeckbleche 36 und 38. Anstelle des zweiten U-Schenkels hat das Eindeckblech 38 einen schräg ansteigenden Zwischenbereich 41, der in einen leicht abgewinkelten Randbereich 42 mündet. Der Randbereich 42 ist - wie die Glasabdeckplatte 7 bei einem der Montagerahmen 9 - mittels der Dichtung 28 zwischen der unteren Profilschiene 18 und der an dem ersten Montagesteg 19 der unteren Profilschiene 18 angeschraubten Halteschiene 20 eingeklemmt. Bei einem nicht dargestellten alternativen Ausführungsbeispiel mündet der Zwischenbereich 41 in eine rückgeführte Umbiegung, die die untere Profilschiene 18 komplett umgreift. Ein unterer Rand dieser Umbiegung und damit des Eindeckblechs 38 ist zusammen mit dem oberen Rand des Verbindungsblechs 31 zwischen dem Montagesteg 21 der unteren Profilschiene 18 und der Oberseite der unteren Wand 12 des Montagehilfsrahmens 34 eingeklemmt.

In Fig. 6 ist ein weiteres Ausführungsbeispiel eines Energiegewinnungssystems 43 mit Energiemodulen 3 gezeigt. In das Energiegewinnungssystem 43 ist ein in Fig. 6 nicht näher gezeigtes nach oben aus der Montageebene 2 abstehendes Fremdelement eingebunden. Bei dem Fremdelement kann es sich z.B. um einen Schornstein oder einen Antennenmast handeln. Auch diesem Fremdelement ist ein Montagehilfsrahmen 34 zugeordnet. Außerdem sind zur Einbindung im Querschnitt L-förmige Eindeckbleche 44 und 45 als Überbrückungselemente vorgesehen. Mit ihrem einen L-Schenkel 46 sind letztere jeweils mittels der Dichtung 30 zwischen der seitlichen Profilschiene 17 und der Oberseite einer seitlichen Wand 11 des Montagehilfsrahmens 34 eingeklemmt. Der andere L-Schenkel der Eindeckbleche 44 und 45 ist in nicht näher gezeigter Weise an dem Fremdelement befestigt.

Sämtliche vorstehend anhand von Fig. 2 bis 6 erläuterten Verbindungen sind aufgrund der Dachneigung und/oder aufgrund der vorgesehenen Kopplungsmechanismen insbesondere wasserdicht ausgeführt. Dank der weitgehend einheitlich verwendeten Komponenten, wie Hilfsrahmen 9 und 34, Profilschienen 16 bis 18 sowie Verbindungsbleche 31 und 33, ist nur eine sehr geringe Bauteilvielfalt erforderlich. Zugleich ist aber eine Einbindung von Fremdelementen in die Energiegewinnungssysteme 1 und 43 sehr einfach und flexibel möglich.

## Patentansprüche

1. Energiegewinnungssystem mit mehreren in einer Montageebene (2) nebeneinander platzierbaren Energiemodulen (3), wobei
a) die Energiemodule (3) zumindest teilweise um ein in der Montageebene (2) vorhandenes Fremdelement (4) herum angeordnet sind,
b) für jedes Energiemodul (3) und jedes Fremdelement (4) ein eigener Montagerahmen (9, 34) vorgesehen ist, und
c) an den Montagerahmen (9, 34) Verbindungsmittel (16, 17, 18, 31, 33, 36, 38; 44, 45) zur mechanischen Verbindung benachbarter Energiemodule (3) oder zur Verbindung des Fremdelements (4) mit benachbarten Energiemodulen (3) angebracht sind.

2. Energiegewinnungssystem nach Anspruch 1, **dadurch gekennzeichnet, dass** die Montagerahmen (9, 34) gleich groß ausgeführt sind.

3. Energiegewinnungssystem nach Anspruch 1, **dadurch gekennzeichnet, dass** die Verbindungsmittel auf einer Oberseite der Montagerahmen (9, 34) befestigte Profilschienen (16, 17, 18) umfassen.

4. Energiegewinnungssystem nach Anspruch 3, **dadurch gekennzeichnet, dass** die Verbindungsmittel auf benachbarte Profilschienen (16, 17, 18) benachbarter Montagerahmen (9, 34) aufsteckbare Verbindungselemente (31, 33) umfassen.

5. Energiegewinnungssystem nach Anspruch 1, **dadurch gekennzeichnet, dass** mindestens ein zwischen dem Fremdelement (4) und dem dem Fremdelement (4) zugeordneten Montagerahmen (34) einsetzbares Überbrückungselement (36, 38; 44, 45) vorgesehen ist.

6. Energiegewinnungssystem nach Anspruch 3, **dadurch gekennzeichnet, dass** an den Profilschienen (16, 17, 18) jeweils mindestens eine Dichtungsaufnahme (22, 23, 26, 27) vorgesehen ist.

7. Energiegewinnungssystem nach Anspruch 3, **dadurch gekennzeichnet, dass** die Profilschienen (16, 17, 18) jeweils mindestens einen vorstehenden Montagesteg (19,21,24,25) umfassen.

8. Energiegewinnungssystem nach Anspruch 1, **dadurch gekennzeichnet, dass** die Montagerahmen (9, 34) mit einer Rückwand (13) versehen sind.

9. Energiegewinnungssystem nach Anspruch 1, **dadurch gekennzeichnet, dass** die den Energiemodulen (3) zugeordneten Montagerahmen (9) mit Anschlussöffnungen (15) zur Durchführung von Funktionsleitungen (8) versehen sind.

10. Energiegewinnungssystem nach Anspruch 1, **dadurch gekennzeichnet, dass** die Montagerahmen (9, 34) jeweils eine Rechteckform mit vier Wänden (10, 11, 12) haben, wobei eine der Wände (12) eine niedrigere Höhe als die anderen drei der Wände (10, 11) hat.
